# EUROPÄISCHE PATENTSCHRIFT

(11) **EP 0 605 792 B1**
(45) Veröffentlichungstag und Bekanntmachung des Hinweises auf die Patenterteilung: **28.07.1999**
(21) Anmeldenummer: 93119305.6
(22) Anmeldetag: 30.11.1993
(51) Int. Cl.: E02D 29/14, E03F 5/06

(54) **Oberflächenentwässerungseinrichtung**
Surface drainage device
Dispositif de drainage superficiel

(30) Priorität: 10.12.1992 DE 4241706; 19.11.1993 DE 4339559
(43) Veröffentlichungstag der Anmeldung: 13.07.1994
(73) Patentinhaber: ACO Severin Ahlmann GmbH & Co. KG, D-24755 Rendsburg (DE)
(72) Erfinder: Sauerwein, Heinrich, Dr., D-24809 Nübbel (DE); Arm, Wolfgang, Dipl.-Ing., D-24768 Rendsburg (DE); Witt, Jan, D-24340 Eckernförde (DE)
(74) Vertreter: Bohnenberger, Johannes, Dr.

(56) Entgegenhaltungen:
- EP-A- 0 081 741
- EP-A- 0 317 919
- EP-A- 0 399 955
- DE-A- 2 727 790
- DE-A- 3 222 972
- DE-U- 8 714 240
- GB-A- 1 519 357
- US-A- 4 844 655

## Beschreibung

Die Erfindung betrifft eine Oberflächenentwässerungseinrichtung nach dem Oberbegriff des Patentanspruches 1.

Derartige Entwässerungseinrichtungen, insbesondere Entwässerungsrinnen sind bekannt, wobei die Abdeckung auf dem Rinnenkörper durch Schrauben befestigt ist. Diese Anbringungsweise erfordert zum einen eine aufwendige Herstellung, zum anderen eine aufwendige Montage.

In der EP 0 399 955 A2 ist ein Verschlußelement zur Sicherung einer Abdeckung an einem Rahmen einer Oberflächenentwässerungseinrichtung beschrieben. In spezieller Ausgestaltung weist die Abdeckung an einer ihrer Kanten eine längliche Ausnehmung auf, die an deren unterer Seite mit einer engeren Durchgangsöffnung kommuniziert. Die Öffnung und die Ausnehmung sind zentriert, so daß sich zwei Schultern oder Vorsprünge ergeben. Der zugehörige Rahmen der Oberflächenentwässerungseinrichtung weist ebenfalls an einer seiner Kanten eine längliche Ausnehmung auf, die an deren Oberseite mit einer engeren Durchgangsöffnung kommuniziert. Die Öffnung und die Ausnehmung sind ebenfalls zentriert, so daß sich auch zwei Schultern oder Vorsprünge ergeben. Zum Befestigen der Abdeckung auf dem Rahmen wird ein im wesentlichen T-förmig ausgestalteter Spreizanker, der an seinem unteren Teil zwei seitlich angeordnete nach oben gespreizte Zungen aufweist, durch die Öffnungen hindurchgedrückt, so daß die Zungen von den einander gegenüberliegenden Rändern der Öffnungen zusammengedrückt werden und nach Passieren der Öffnungen dank ihrer elastischen Kraft wieder auseinandergespreizt werden. In diesem Zustand liegt der obere Teil des T-förmigen Spreizankers in der Ausnehmung der Abdeckung. Die Zungen sind am unteren Teil des Spreizankers in der Ausnehmung des Rahmens verspreizt, wobei sie an der Unterseite der Schulter anliegen. Um Maßtoleranzen kompensieren zu können, weist die Ausnehmung des Rahmens abgerundete Schultern auf.

Aus der EP 204 278 A2, der EP 476 672 A1 sowie der DE 31 33 658 A1 sind Oberflächenentwässerungseinrichtungen der eingangs genannten Art bekannt, wobei die Befestigungseinrichtungen keine Schrauben umfassen. Dadurch wird das Aufsetzen und Abnehmen der Abdeckung erleichtert. Die bekannten Anordnungen sind allerdings recht kompliziert. Darüber hinaus müssen die Bauteile mit geringen Toleranzen gefertigt sein.

Der Erfindung liegt die Aufgabe zugrunde, eine Oberflächenentwässerungseinrichtung der eingangs genannten Art dahingehend weiterzubilden, daß eine einfache Herstellung und Montage ermöglicht wird.

Diese Aufgabe wird durch die im Patentanspruch 1 angegebenen Merkmale gelöst.

Ein wesentlicher Punkt der Erfindung liegt darin, daß eine einfache Klemmvorrichtung vorgesehen ist, um die Abdeckung auf der Entwässerungsrinne zu befestigen. Erstaunlicherweise hatte sich nämlich gezeigt, daß die von einer solchen einfachen Vorrichtung sichergestellten Haltekräfte durchaus hinreichend sind, um ein Abheben der Abdeckung beim Überfahren sicher zu verhindern.

Die Befestigungseinrichtungen umfassen eine am Körper bzw. an der Entwässerungsrinne befestigte Klemmfeder und einen an der Abdeckung befestigten Zapfen mit einem verdickten, beim Einsatz führenden Vorderende. Diese Teile sind derart ausgebildet, daß der Zapfen in einer zur Ebene, in der sich die Abdeckung erstreckt, im wesentlichen senkrechten Richtung in eine Aufnahmeöffnung der Klemmfeder unter deren elastischer Verformung einsetzbar ist. Nach dem Einsetzen wird der Zapfen und damit die Abdeckung in der Klemmfeder bzw. auf dem Körper bzw. der Entwässerungsrinne gehalten. Selbstverständlich ist es möglich, die Anordnung von Klemmfeder und Zapfen auch umgekehrt bezüglich Abdeckung und Körper zu treffen. Die Aufnahmeöffnung der Klemmfeder ist langgestreckt ausgebildet. Dadurch kann der Zapfen an beliebigen Stellen entlang der Längsachse der Aufnahmeöffnung eingesetzt werden, so daß die Fertigungstoleranzen von Rinne und Abdeckung relativ hoch sein können.

Alternativ oder zusätzlich zu der langgestreckten Ausgestaltung der Aufnahmeöffnung ist die Klemmfeder derartig mit Spiel befestigt, daß der Zapfen beim Einsetzen in die Aufnahmeöffnung die Klemmfeder verschieben kann. Auch dies dient dazu, große Toleranzen bei der Fertigung von Rinne und Abdeckung zuzulassen.

Bei einer bevorzugten Ausführungsform der Erfindung ist der verdickte Abschnitt am Vorderende des Zapfens spitzkegelig und an seinem der Abdeckung zugewandten Ende stumpfkegelig ausgebildet. Dadurch sind die zum Zusammenbau notwendigen Kräfte geringer als die zum Abheben der Abdeckung.

Vorzugsweise wird die oben bereits angedeutete Ausführungsform, bei welcher die Aufnahmeöffnung langgestreckt ausgebildet ist, verwendet und dabei gleichzeitig die Klemmfeder mit Spiel in nur einer Richtung, nämlich senkrecht zur Längsachse der Aufnahmeöffnung so befestigt, daß sie vom Zapfen beim Einsetzen in die Aufnahmeöffnung in der zur Längsachse der Aufnahmeöffnung senkrechten Richtung verschoben werden kann. Die zwei Freiheitsgrade werden also auf unterschiedliche Weise sichergestellt, was einen sehr stabilen Aufbau mit sich bringt.

Bei einer bevorzugten Ausführungsform ist die Klemmfeder im wesentlichen bandförmig ausgebildet und weist einen unteren, im wesentlichen U- oder V-förmigen Federabschnitt und zwei daran angrenzende U-förmige Halteabschnitte auf, die jeweils mit einem Schenkelende in einen Schenkel des Federabschnitts übergehen und deren offene Seiten nach außen ragen. Die Klemmfeder wird dann in einer (vorzugsweise) rechteckigen Öffnung eines flächigen Teils derart angeordnet, daß sie mit den Schenkeln der Halteabschnitte zwei einander gegenüberliegende Ränder der Öffnung des flächigen Teils übergreift. Auf diese Weise ist zum einen der Zusammenbau der Anordnung sehr einfach, zum anderen wird die Verschiebbarkeit der Klemmfeder gewährleistet.

Wie eingangs angedeutet, genügt im allgemeinen der lösbare Klemmsitz, bei welchem die Kraft beim Zusammenbau größer ist als die Kraft beim Abheben der Abdeckung. Wenn man größere Haltekräfte sicherstellen will, so eignet sich eine Ausführungsform, bei welcher der Zapfen um seine Längsachse drehbar (in der Abdeckung) befestigt ist und sein verdicktes Ende zwei einander gegenüberliegende Spreizflächen aufweist, so daß der Zapfen bei einer Parallellage der Spreizflächen zur Längsachse der Aufnahmeöffnung die Klemmfeder aufspreizt und aus deren Aufnahmeöffnung herausnehmbar und in die Aufnahmeöffnung einsetzbar ist. Bei einer geeigneten Dimensionierung sowohl des Kegelwinkels des stumpfkegeligen Zapfenabschnitts als auch der Öffnung, in welcher die Klemmfeder sitzt, kann somit gewährleistet werden, daß die Verbindung unlösbar ist. Die Abdeckung kann also nur dann von der Rinne abgehoben werden, wenn man den Zapfen dreht.

Als Befestigungsort für die Klemmfeder kann eine im Körper bzw. in der Rinne befestigte Traverse dienen, in welcher sich die Öffnung zum Aufnehmen der Klemmfeder befindet. Alternativ kann die Klemmfeder in einer aus Metall bestehenden Zarge befestigt sein, welche zur Auflage der Abdeckung als Verstärkung eines Oberrandes des Körpers (wie aus der EP 81 762 C1 bekannt) vorgesehen ist. In diesem Fall ist es von Vorteil, wenn man die Klemmfeder in einem Flachstück befestigt, das in eine seitlich offene Tasche in der Zarge einsetzbar ist. Weiterhin ist es von Vorteil, wenn die Abdeckung eine Haltenase aufweist, welche das Flachstück dann gegen ein Herausrutschen aus der Tasche sichert, wenn die Abdeckung auf der Rinne bzw. dem Körper sitzt.

Weitere bevorzugte Ausführungsformen der Erfindung ergeben sich aus den Unteransprüchen.

Nachfolgend werden Ausführungsbeispiele der Erfindung anhand von Abbildungen näher erläutert. Hierbei zeigt
- Fig. 1: einen Vertikal-Querschnitt durch eine Entwässerungsrinne nach einer ersten bevorzugten Ausführungsform der Erfindung,
- Fig. 2: eine Draufsicht auf die Rinne nach Fig. 1,
- Fig. 3: eine Seitenansicht einer Klemmfeder,
- Fig. 4: eine Seitenansicht eines Befestigungsstückes,
- Fig. 5: einen Querschnitt durch eine Entwässerungsrinne mit Zarge,
- Fig. 6: eine Ansicht auf eine Zarge der Rinne nach Fig. 5 entlang der Linie VI-VI,
- Fig. 7: eine Ansicht auf die Zarge nach Fig. 6 entlang der Linie VII-VII,
- Fig. 8: eine Ansicht auf die Rinne nach Fig. 5 entlang der Linie XIII-XIII,
- Fig. 9: eine Seitenansicht einer anderen Ausführungsform einer Klemmfeder,
- Fig. 10: eine Seitenansicht einer weiteren Ausführungsform eines Befestigungsstücks,
- Fig. 11: eine Ansicht auf das Befestigungsstück nach Fig. 10 entlang der Linie XI-XI,
- Fig. 12: eine Ansicht auf das Befestigungsstück nach Fig. 11 entlang der Linie XII-XII,
- Fig. 13: einen Teil-Längsschnitt durch eine Entwässerungsrinne mit aufgesetzter Abdeckung,
- Fig. 14: eine Ansicht entlang der Linie XIV-XIV aus Fig. 13,
- Fig. 15: einen Teilschnitt änlich dem nach Fig. 13 mit eingesetztem Befestigungsstück,
- Fig. 16: eine Ansicht entlang der Linie XVI-XVI aus Fig. 15,
- Fig. 17: eine Ansicht ähnlich der nach Fig. 15, jedoch mit verdrehtem Befestigungsstück und
- Fig. 18: eine Ansicht entlang der Linie XVIII-XVIII aus Fig. 17,
- Fig. 19: eine Teilschnittdarstellung der Befestigung der Abdeckung am Befestigungsstück mittels Kerbnagel, und
- Fig. 20: eine Seitenansicht eines zur Befestigung gemäß Fig. 19 verwendeten Kerbnagels mit Kreuzrändel.

Bei der nachfolgenden Beschreibung werden gleiche und gleich wirkende Teile mit denselben Bezugsziffern bezeichnet.

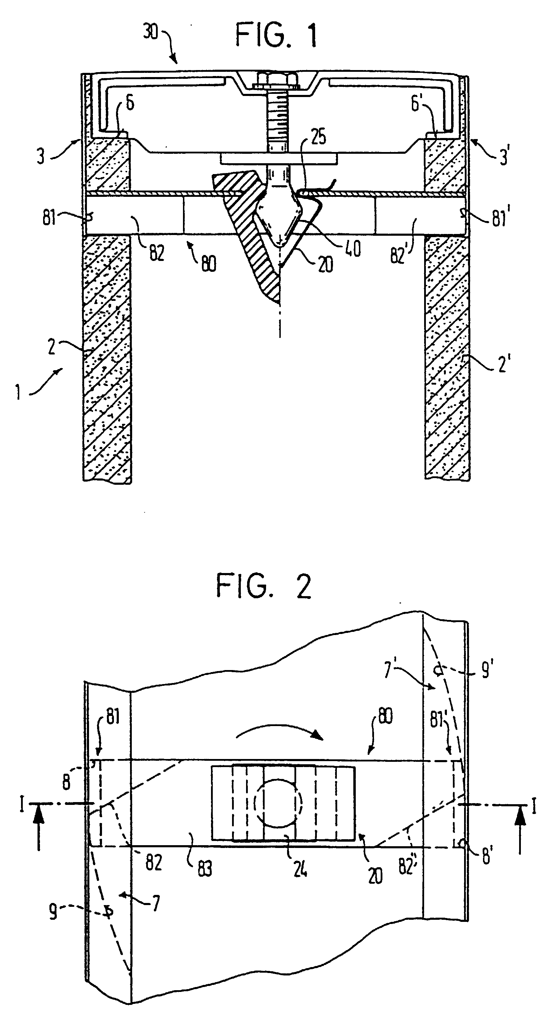

In Fig. 1 ist ein Teil-Querschnitt durch eine Entwässerungsrinne 1 gezeigt, in deren Seitenwänden 2, 2' kurz unterhalb des Oberrands 3, 3' bzw. einer Auflage 6, 6' für eine Abdeckung 30 Ausnehmungen 7, 7' vorgesehen sind. Diese Ausnehmungen 7, 7' weisen eine Vorderwand 8, 8' und eine schräg verlaufende Hinterwand 9, 9' auf. Die beiden Ausnehmungen 7, 7' sind um einen Betrag versetzt, welcher der Breite einer Traverse 80 entspricht.

Die Traverse 80 weist an ihren Enden 81, 81' Klemmeinrichtungen 82, 82' auf, welche sich bei eingesetzter Traverse in die Ausnehmungen 7, 7' einspreizen können. Eine so ausgebildete Rinne (allerdings ohne die hier gezeigte Traverse 80) ist beispielsweise aus der EP 81 741 C1 bekannt.

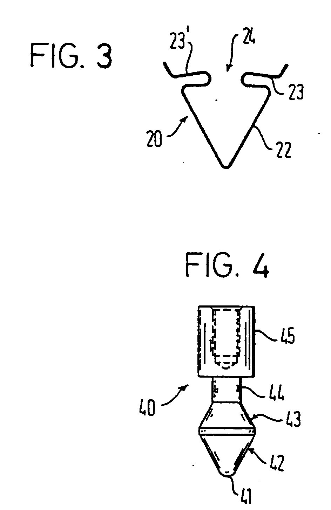

Die Traverse 80 weist in ihrer Grundfläche 83 eine im wesentlichen rechteckige Öffnung auf, in welcher eine Klemmfeder 20 sitzt, die als Befestigungsgegenstück dient. Die Klemmfeder 20 weist, wie in Fig. 3 gezeigt, einen unteren Federabschnitt 22 auf, der im wesentlichen V-förmig ausgebildet ist. Selbstverständlich kann man ihn auch U-förmig bzw. halbkreisförmig ausführen. Am oberen Ende der Klemmfeder 20 sind Halteabschnitte 23, 23' vorgesehen, die einen im wesentlichen U-förmigen Querschnitt aufweisen und jeweils mit einem Schenkel in einen Schenkel des unteren Federabschnitts 22 übergehen. Die Halteabschnitte 23, 23' weisen mit ihren Öffnungen nach außen und bilden zwischen sich eine längliche Aufnahmeöffnung 24. Diese Klemmfeder kann aus einem bandförmigen Metallstreifen (Fig. 1 rechts) oder aus Kunststoff (Fig. 1 links) gefertigt sein.

Die Klemmfeder 20 ist in die Öffnung 25 in der Traverse 80 so eingesetzt, daß die Halteabschnitte 23, 23' mit ihren Schenkeln den Rand der Öffnung 25 übergreifen. Hierbei ist die Anordnung derart dimensioniert, daß die Klemmfeder 20 in den Figuren 1 und 2 nach links und rechts verschoben werden kann, so daß die Ränder der Öffnung 25 mehr oder weniger tief in die Halteabschnitte 23, 23' eingreifen.

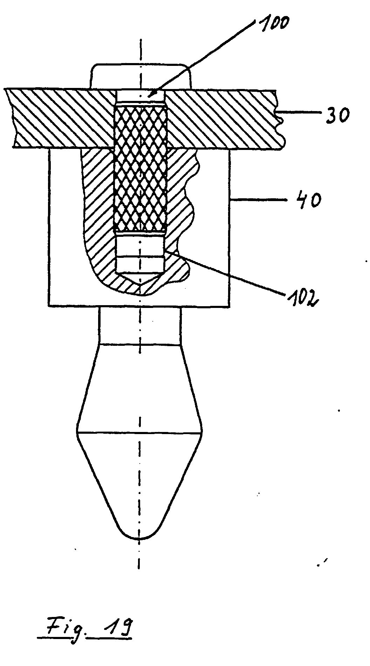

An der Abdeckung 30 ist als Befestigungsstück 40 ein Zapfen befestigt, der, wie in Fig. 4 gezeigt, eine Spitze 41 aufweist, welche am Ende einer Konusfläche 42 sitzt. Die Konusfläche 42 geht in eine gegensätzlich geneigte Haltefläche 43 über, wobei der Winkel der Haltefläche 43 steiler ist als der Winkel der Konusfläche 42. Die Haltefläche 43 wiederum geht (an ihrem verjüngten Ende) in einen Schaft 44 über, an dessen Ende ein Kopf 45 sitzt. Dieses Befestigungsstück 40 ist in einer etwas anderen Ausführungsform in Fig. 1 ebenfalls gezeigt und an der Abdeckung 30 durch eine Schraube oder gemäß Fig. 19 mittels Kerbnagel 100 befestigt.

Beim Aufsetzen der Abdeckung 30 auf die Rinne 1 wird das Befestigungsstück 40 mit seiner Spitze 41 in die Aufnahmeöffnung 24 eingesetzt und verschiebt hierbei - falls das Einsetzen nicht ganz mittig geschieht - das Befestigungsgegenstück bzw. die Klemmfeder 20 nach rechts oder links, so daß die Aufnahmeöffnung 24 symmetrisch zur Längsachse des Befestigungsstücks 40 verläuft. Durch die längliche Ausbildung der Aufnahmeöffnung 24 ist es hierbei im wesentlichen gleichgültig, an welchem Ende der Aufnahmeöffnung 24 das Befestigungsstück 40 eingesetzt wird. Beim Hineindrücken wird der untere Federabschnitt 22 aufgespreizt, so daß die Halteabschnitte 23, 23' nach außen rücken und die Aufnahmeöffnung 24 verbreitert wird, bis die Konusfläche 42 vollständig in die Aufnahmeöffnung 24 eingeschoben ist. Bei weiterem Eindrücken geht der untere Federabschnitt 22 wieder zusammen, so daß die Aufnahmeöffnung 24 die Haltefläche 43 entlanggleitet, bis die Abdeckung 30 fest auf den Auflagen 6, 6' sitzt. Die Dimensionierung ist hierbei so gewählt, daß im fest aufgesetzten Zustand der Abdeckung 30 die in Fig. 1 gezeigte Position der Halteabschnitte 23, 23' zur Haltefläche 43 gewährleistet ist, also ein "selbsttätiges Nachspannen" möglich ist. Der Neigungswinkel der Konusfläche 42 ist weiterhin so gewählt, daß ein Herausziehen des Befestigungsstücks 40 aus der Klemmfeder 20 nur mit erhöhter Kraft möglich ist.

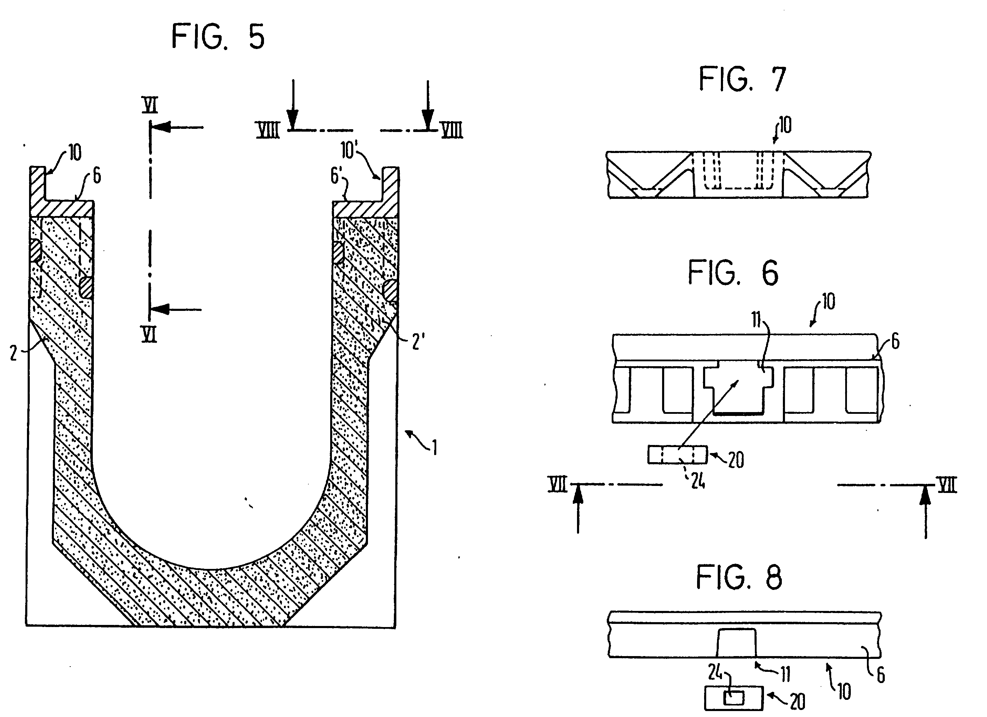

Bei der in Fig. 5 gezeigten Ausführungsform einer Rinne 1 sind an deren Oberseiten Zargen 10, 10' aus Metall miteingegossen, wie dies an sich bekannt ist.

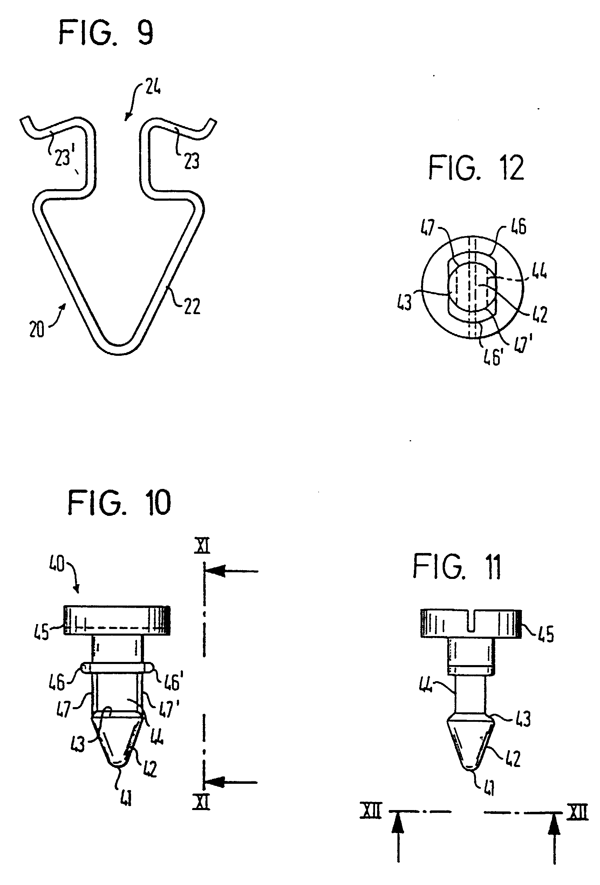

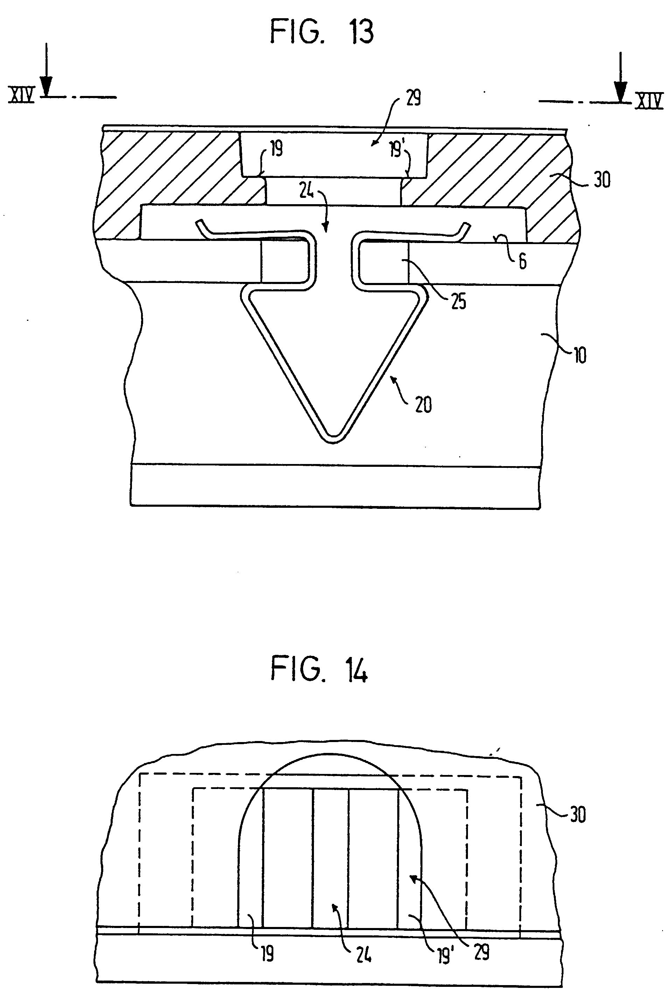

In den Zargen 10, 10' sind, wie in Fig. 6 gezeigt, Taschen 11 vorgesehen, in welche flachbandförmige Befestigungsstücke 20 einsetzbar sind. Diese weisen rechteckige Aufnahmeöffnungen 24 auf. In diese Aufnahmeöffnungen 24 können wieder Klemmfedern eingesetzt werden, wie sie - im wesentlichen maßstabgerecht in Fig. 9 gezeigt sind. Im Prinzip gleicht diese in Fig. 9 gezeigte Klemmfeder derjenigen nach Fig. 3. Bei einer anderen, in den Figuren 13-18 gezeigten Ausführungsform der Erfindung ist die Öffnung 25 direkt in der Zarge 10 vorgesehen.

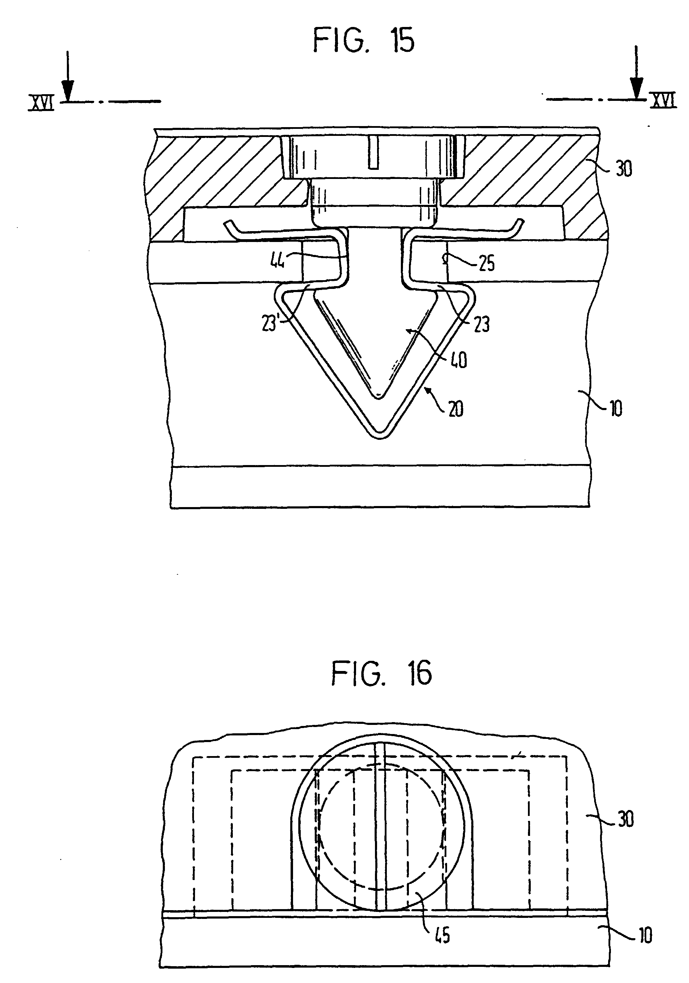

In der Abdeckung 30 ist eine Aufnahmeöffnung 29 (Figuren 13, 14) vorgesehen, durch welche ein Befestigungsstück 40 nach den Figuren 10-12 in die Öffnung 24 eingesetzt werden kann, bis es mit seinem verbreiterten Kopf 45 auf einer Auflagefläche 19 der Aufnahmeöffnung 29 aufliegt. Diese Position ist in Fig. 15 gezeigt. Hierbei sitzen die Halteabschnitte 23, 23' derart auf der sehr steil geformten Haltefläche 43, daß ein Herausziehen des Befestigungsstücks 40 aus der Klemmfeder 20 praktisch nicht möglich ist.

Das Befestigungsstück 40 weist nun, wie in den Figuren 10-12 gezeigt, keine achssymmetrische Form wie das in Fig. 4 gezeigte Befestigungsstück auf, vielmehr weist es zwei Spreizflächen 47, 47' auf, welche im wesentlichen denselben Durchmesser haben wie die Konusfläche 42 an ihrem dicken Ende. Diese Spreizflächen 47, 47' liegen einander direkt gegenüber. Im 90°-Winkel hierzu sind die Haltefläche 43 und der Schaft 44 eingeformt, so daß die in den Figuren 10-12 gezeigte Konfiguration entsteht.

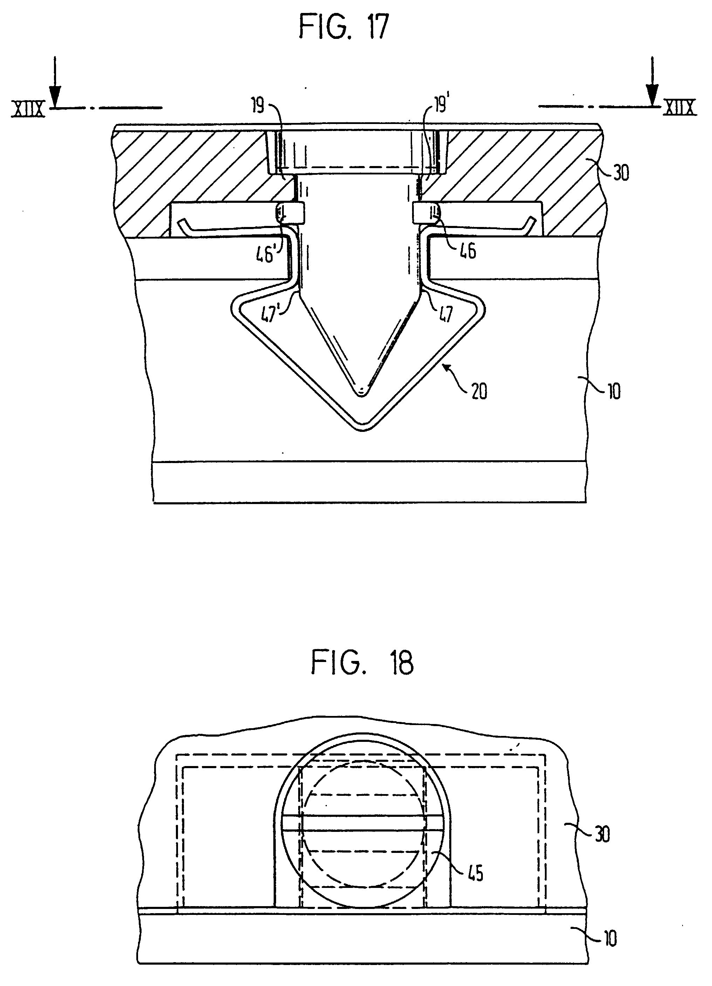

Wenn man also das Befestigungsstück 40 aus seiner, in den Figuren 15 und 16 gezeigten, Position heraus um 90° dreht, so erreicht man die in den Figuren 17 und 18 gezeigte Position. In dieser Position drücken die Spreizflächen 47, 47' die Klemmfeder 20 auseinander, so daß die Abdeckung 30 abgehoben werden kann. Zum Einsetzen ist es im Prinzip gleichgültig, in welcher Drehposition sich das Befestigungsstück 40 befindet.

Ein weiteres wichtiges Merkmal dieser Ausführungsform besteht darin, daß am Befestigungsstück 40 Haltenasen 46, 46' vorgesehen sind, welche bei der in Fig. 17 gezeigten Drehposition des Befestigungsstücks 40 dieses in der Aufnahmeöffnung 29 durch Eingriff unter den Auflageflächen 19 gegen ein Herausfallen sichern. Bei der in den Figuren 15 und 16 gezeigten Drehposition befinden sich die Haltenasen 46 bzw. 46' nicht mehr unter den Auflageflächen 19, 19' (Fig. 14), sondern in der Aufnahmeöffnung 29. Auf diese Weise lassen sich die Befestigungsstücke 40 in eine Abdeckung 30 hineinstecken und dort unverlierbar halten.

Selbstverständlich ist es auch möglich, anstelle der Spreizflächen 47, 47' gemäß Fig. 10 und 12 auch Abschnitte vorzusehen, in welchen die Haltefläche 43 und entsprechende Teile der Konusfläche 42 durch Fortsetzung des Schaftes 44 (als planparallele Flächen) fortfallen. Die in den Figuren 10-12 gezeigte Variante ist jedoch insofern bevorzugt, als ein ungewolltes Verdrehen des Befestigungsstücks 40 in Öffnungsrichtung durch das dazu notwendige Aufspreizen der Klemmfeder 20 verhindert wird.

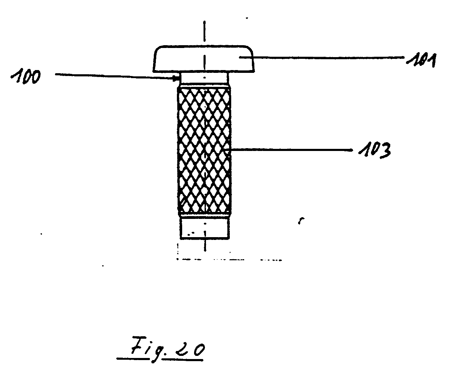

Mit Hilfe der Fig. 19 und 20 soll die bereits erwähnte Ausführungsform der schraubenlosen Befestigung der Abdeckung 30 am Befestigungsstück 40 näher erläutert werden.

Im Falle der erwähnten Verwendung eines Kerbnagels 100 besitzt das Befestigungsstück 40 bzw. der Zapfen 41-46 eine Bohrung 102, die einen entsprechenden Preßsitz des Kerbnagels 100 nach dem Eindrücken bzw. Einpressen desselben gewährleistet.

Der verwendete Kerbnagel 100 weist Kreuz- oder besonders tragfähige und vorteilhafte Linienrändel auf. Die Rändellänge liegt im wesentlichen in einem Bereich, der dem Doppelten des Durchmessers des Kerbnagels 100 entspricht.

Das Einpressen des Kerbnagels 100 zur Herstellung einer festen Verbindung zwischen Befestigungsstück 40 und Abdeckung 30 erfolgt mittels Druckluft und wird zweckmäßigerweise bereits bei der Herstellung der Abdeckung 30 durchgeführt. Hierdurch wird ein komplettes Bauteil aus Abdeckung 30 und Befestigungsstücken 40 geschaffen, welches bedingt durch die Ausbildung der Zapfen 41-46 des Befestigungsstückes 40 sowie der Gestaltung der Konus- sowie der Haltefläche 42 und 43 leicht vor Ort montiert und demontiert werden kann, ohne daß aufwendige Schraubverbindungen erforderlich sind.

Die Auswahl der Werkstoffpaarungen zwischen Abdeckung 30, Befestigungsstück 40 und dem Kerbnagel 100 erfolgt zum einen unter dem Aspekt der Vermeidung von Korrosion und zum anderen unter dem Gesichtspunkt der Verhinderung von Schaftaufbauchungen des Kerbnagels bei maximal möglichen Einpreß- und Auszugskräften.

Besonders vorteilhaft hat sich die Verwendung eines Kerbnagels 100 mit Flachkopf 101 gemäß Fig. 38, hier mit Kreuzrändel 103 dargestellt, erwiesen, bei welchem ohne zustäzliche Führung eine Ausrichtung bzw. Zentrierung beim Einpressen in die Bohrung 102 gewährleistet ist.

Im Falle einer Abdeckung 30 aus Gußeisen besteht der Kerbnagel 100 aus Vanadinstahl bzw. FOR 2A.

Es hat sich überraschenderweise gezeigt, daß die Verbindung zwischen der Abdeckung 30 und dem Befestigungsstück 40 mittels einem oder mehreren Kerbnägeln eine Festigkeit gegenüber Schlag und Zug besitzt, die aufgrund eines vermuteten Kaltschweißvorgangs über der Festigkeit liegt, wie bei einem reinen Preßsitz zu erwarten.

### Bezugszeichenliste

- 1: Körper/Rinne
- 2: Seitenwand
- 3: Oberrand
- 6: Auflage
- 7: Ausnehmung
- 8: Vorderwand
- 9: Hinterwand
- 10: Zarge
- 11: Tasche
- 19: Auflagefläche
- 20: Befestigungsgegenstück
- 22: unterer Federabschnitt
- 23: Halteabschnitt
- 24: Aufnahmeöffnung
- 25: Öffnung
- 29: Aufnahmeöffnung
- 30: Abdeckung
- 40: Befestigungsstück
- 41: Spitze
- 42: Konusfläche
- 43: Haltefläche
- 44: Schaft
- 45: Kopf
- 46: Haltenase
- 47: Spreizfläche
- 80: Traverse
- 81: Ende
- 82: Klemmeinrichtung
- 83: Grundfläche
- 100: Kerbnagel
- 101: Flachkopf
- 102: Bohrung
- 103: Kreuzrändel

## Patentansprüche

1. Oberflächenentwässerungseinrichtung, insbesondere Entwässerungsrinne, mit einer Abdeckung (30), die mittels einer Befestigungseinrichtung (20, 40) auf einem im Boden eingebauten Körper (1), insbesondere einem Rinnenkörper, befestigbar ist,
**dadurch gekennzeichnet,**
daß die Befestigungseinrichtung (20, 40) eine am Körper (1) befestigte Klemmfeder (22, 23) und einen an der Abdeckung (30) befestigten Zapfen (41-46) mit einem verdickten, beim Einsetzen führenden Vorderende (41, 42) aufweist oder eine an der Abdeckung befestigte Klemmfeder und einen an dem Körper befestigten Zapfen mit einem solchen Vorderende aufweist und daß die Befestigungseinrichtung (20, 40) derart ausgebildet ist, daß der Zapfen (41-46) in einer zur Ebene, in der sich die Abdeckung (30) erstreckt, im wesentlichen senkrechten Richtung in eine Aufnahmeöffnung (24) der Klemmfeder (22, 23) unter deren elastischer Verformung einsetzbar ist und nach dem Einsetzen gehalten wird, wobei
- die Aufnahmeöffnung (24) langgestreckt ausgebildet ist, so daß der Zapfen (41-46) an beliebigen Stellen entlang der Längsachse der Aufnahmeöffnung (24) einsetzbar ist
und/oder
- die Klemmfeder (22, 23) derart mit Spiel befestigt ist, daß der Zapfen (41, 46) beim Einsetzen in die Aufnahmeöffnung (24) die Klemmfeder (22, 23) verschieben kann.

2. Oberflächenentwässerungseinrichtung nach Anspruch 1,
**dadurch gekennzeichnet,**
daß der verdickte Abschnitt am Vorderende (41, 42) spitzkegelig und an seinem der Abdeckung zugewandten Ende (43) stumpf-kegelig ausgebildet ist.

3. Oberflächenentwässerungseinrichtung nach einem der Ansprüche 1 oder 2,
**dadurch gekennzeichnet,**
daß die Aufnahmeöffnung (24) langgestreckt ausgebildet ist, so daß der Zapfen (41-46) an beliebigen Stellen entlang der Längsachse der Aufnahmeöffnung (24) einsetzbar ist, und daß die Klemmfeder (22, 23) mit Spiel in einer Richtung senkrecht zur Längsachse der Aufnahmeöffnung (24) derart befestigt ist, daß der Zapfen (41-46) beim Einsetzen in die Aufnahmeöffnung (24) die Klemmfeder in der zu deren Längsachse senkrechten Richtung verschieben kann.

4. Oberflächenentwässerungseinrichtung nach einem der vorhergehenden Ansprüche,
**dadurch gekennzeichnet,**
daß die Klemmfeder (22, 23) im wesentlichen bandförmig ausgebildet ist und einen unteren, im wesentlichen U- oder V-förmigen Federabschnitt (22) und zwei daran angrenzende U-förmige Halteabschnitte (23, 23') aufweist, die jeweils mit einem Schenkelende in einen Schenkel des Federabschnitts (22) übergehen und deren offene Seiten nach außen ragen, und daß die Klemmfeder (22, 23) in einer Öffnung (25) eines flächigen Teils derart sitzt, daß die Klemmfeder (22, 23) mit den Schenkeln der Halteabschnitte (23, 23') zwei einander gegenüberliegende Ränder der Öffnung (24) des flächigen Teils übergreift.

5. Oberflächenentwässerungseinrichtung nach einem der Ansprüche 3 oder 4,
**dadurch gekennzeichnet,**
daß der Zapfen (41-46) um seine Längsachse drehbar befestigt ist und zwei einander gegenüberliegende Spreizflächen (47, 47') aufweist, welche im Durchmesser dem verdickten Ende entsprechen, so daß der Zapfen (41-46) bei einer Anlage der Spreizflächen (47, 47') an den Halteabschnitten (23, 23') die Klemmfeder (22, 23) spreizt und der Zapfen (41-46) aus deren Aufnahmeöffnung (24) herausnehmbar ist.

6. Oberflächenentwässerungseinrichtung nach einem der vorhergehenden Ansprüche,
**dadurch gekennzeichnet,**
daß die Klemmfeder (22, 23) in einer im Körper (1) befestigbaren Traverse (80) befestigt ist.

7. Oberflächenentwässerungseinrichtung nach einem der Ansprüche 1-5,
**dadurch gekennzeichnet,**
daß die Klemmfeder (22, 23) in einer aus Metall bestehenden Zarge (10, 10') befestigt ist, welche zur Auflage der Abdeckung (30) als Verstärkung eines Oberrandes (6) des Körpers (1) vorgesehen ist.

8. Oberflächenentwässerungseinrichtung nach Anspruch 7,
**dadurch gekennzeichnet,**
daß die Klemmfeder (22, 23) in einem Flachstück (20) befestigt ist, das in eine seitlich offene Tasche (11) in der Zarge (10, 10') einsetzbar ist.

9. Oberflächenentwässerungseinrichtung nach Anspruch 8,
**dadurch gekennzeichnet,**
daß die Abdeckung (30) eine Haltenase aufweist, welche das Flachstück (20) gegen ein Herausrutschen aus der Tasche (11) sichert.

10. Oberflächenentwässerungseinrichtung nach Anspruch 1,
**dadurch gekennzeichnet,**
daß der Zapfen (41-46) bzw. das Befestigungsstück (40) mittels eines Kerbnagels (100) an der Abdeckung (30) befestigt ist.

11. Oberflächenentwässerungseinrichtung nach Anspruch 10,
**dadurch gekennzeichnet,**
daß der Kerbnagel (100) Rändel (103) mit einer Rändellänge in einem Bereich von im wesentlichen dem Doppelten des Durchmessers des Kerbnagels (100) aufweist.

12. Oberflächenentwässerungseinrichtung nach einem der Ansprüche 1-11,
**dadurch gekennzeichnet,**
daß der Zapfen (41-46) unverlierbar an der Abdeckung (30) befestigt ist.

13. Oberflächenentwässerungseinrichtung nach einem der Ansprüche 1-12,
**dadurch gekennzeichnet,**
daß die Formgebung der Klemmfeder (22, 23) und/oder des Zapfens (41-46) so getroffen ist, daß ein selbständiges Nachspannen der Befestigungseinrichtung (20, 40) in Einführrichtung des Zapfens (41-46) erfolgt.

## Claims

1. A surface drainage device, in particular a drainage channel, having a cover (30) securable, by means of a securing arrangement (20, 40), on a body (1), in particular a channel body, placed in the ground, characterised in that the securing arrangement (20, 40) has a clamping spring (22, 23) which is secured to the body (1) and a peg (41-46) which is secured to the cover (30) and which has an enlarged front end (41, 42) leading upon insertion or the securing arrangement (20, 40) has a clamping spring which is secured to the cover and a peg which is secured to the body and which has a front end of that kind, and in that the securing arrangement (20, 40) is such that in a direction substantially perpendicular to the plane in which the cover (30) extends, the peg (41-46) is insertable into a receiving opening (24) of the clamping spring (22, 23) with elastic deformation of the latter and is held after insertion,
- the receiving opening (24) being elongate, so that the peg (41-46) can be inserted at any site along the longitudinal axis of the receiving opening (24)
and/or
- the clamping spring (22, 23) being secured with play in such a manner that the peg (41, 46) can displace the clamping spring (22, 23) upon insertion into the receiving opening (24).

2. A surface drainage device in accordance with Claim 1, characterised in that the enlarged portion is in the form of a pointed cone at the front end (41, 42) and is in the form of a truncated cone at its end (43) facing the cover.

3. A surface drainage device in accordance with either one of Claims 1 and 2, characterised in that the receiving opening (24) is elongate, so that the peg (41-46) can be inserted at any site along the longitudinal axis of the receiving opening (24), and in that the clamping spring (22, 23) is secured with play in a direction perpendicular to the longitudinal axis of the receiving opening (24) in such a manner that the peg (41-46) can, upon insertion into the receiving opening (24), displace the clamping spring in the direction perpendicular to the longitudinal axis thereof.

4. A surface drainage device in accordance with any one of the preceding Claims, characterised in that the clamping spring (22, 23) is substantially band-like and has a lower, substantially U-shaped or V-shaped spring portion (22) and two adjoining U-shaped holding portions (23, 23'), one leg end of each holding portion (23, 23') becoming a leg of the spring portion (22) and the open side of each of these holding portions projecting outwards, and in that the clamping spring (22, 23) is located in an opening (25) in a flat part in such a manner that the clamping spring (22, 23) engages over two facing edges of the opening (24) in the flat part by means of the legs of the holding portions (23, 23').

5. A surface drainage device in accordance with either one of Claims 3 and 4, characterised in that the peg (41-46) is secured so as to be rotatable about its longitudinal axis and has two facing spreading surfaces (47, 47') which correspond in diameter to the enlarged end, so that when the spreading surfaces (47, 47') contact the holding portions (23, 23'), the peg (41-46) forces apart the clamping spring (22, 23) and the peg (41-46) can be removed from its receiving opening (24).

6. A surface drainage device in accordance with any one of the preceding Claims, characterised in that the clamping spring (22, 23) is secured in a traverse (80) securable in the body (1).

7. A surface drainage device in accordance with any one of Claims 1-5, characterised in that the clamping spring (22, 23) is secured in a rim (10, 10') which is composed of metal and which, to support the cover (30), is provided as a reinforcement of an upper edge (6) of the body (1).

8. A surface drainage device in accordance with Claim 7, characterised in that the clamping spring (22, 23) is secured in a flat piece (20) insertable into a laterally open pocket (11) in the rim (10, 10').

9. A surface drainage device in accordance with Claim 8, characterised in that the cover (30) has a holding projection which secures the flat piece (20) against slipping out of the pocket (11).

10. A surface drainage device in accordance with Claim 1, characterised in that the peg (41-46) or the securing piece (40) is secured to the cover (30) by means of a ribbed nail (100).

11. A surface drainage device in accordance with Claim 10, characterised in that the ribbed nail (100) has knurling (103) with a knurling length in a range which is substantially twice the diameter of the ribbed nail (100).

12. A surface drainage device in accordance with any one of Claims 1-11, characterised in that the peg (41-46) is secured to the cover (30) so as to be undetachable.

13. A surface drainage device in accordance with any one of Claims 1-12, characterised in that the clamping spring (22, 23) and/or the peg (41-46) are fashioned such that automatic retightening of the securing arrangement (20, 40) takes place in the insertion direction of the peg (4146).

## Revendications

1. Dispositif de drainage superficiel, en particulier rigole de drainage, comportant une couverture (30), qui peut être fixée au moyen d'un dispositif de fixation (20, 40) sur un corps (1) monté dans le sol, en particulier un corps de rigole,
caractérisé en ce que le dispositif de fixation (20, 40) comporte un ressort de serrage (22, 23) fixé au corps (1) et un tenon (41 à 46) fixé à la couverture (30) avec une extrémité avant (41, 42) surépaissie, servant de guidage pendant l'insertion, ou un ressort de serrage fixé à la couverture et un tenon fixé au corps avec une même extrémité avant et en ce que le dispositif de fixation (20, 40) est conformé de manière que le tenon (41 à 46) puisse être inséré dans une ouverture formant logement (24) du ressort de serrage (22, 23), par déformation élastique de celui-ci, dans une direction sensiblement perpendiculaire au plan dans lequel s'étend la couverture (30) et en ce qu'il est maintenu après insertion,
- l'ouverture formant logement (24) étant allongée, de sorte que le tenon (41 à 46) peut être inséré en des emplacements quelconques le long de l'axe longitudinal de l'ouverture formant logement (24)
et/ou
- le ressort de serrage (22, 23) étant fixé avec un jeu tel que le tenon (41, 46) puisse faire coulisser le ressort de serrage (22, 23) lors de l'insertion dans l'ouverture formant logement (24).

2. Dispositif de drainage superficiel selon la revendication 1, caractérisé en ce que la portion surépaissie à l'extrémité avant (41, 42) est de forme conique pointue et, à son extrémité (43) toumée vers la couverture, est de forme tronconique.

3. Dispositif de drainage superficiel selon l'une des revendications 1 ou 2, caractérisé en ce que l'ouverture formant logement (24) est allongée, de sorte que le tenon (41 à 46) peut être inséré en des emplacements quelconques le long de l'axe longitudinal de l'ouverture formant logement (24), et en ce que le ressort de serrage (22, 23) est fixé avec jeu dans une direction perpendiculaire à l'axe longitudinal de l'ouverture formant logement (24), de manière que lors de son insertion dans l'ouverture formant logement (24) le tenon (41 à 46) puisse faire coulisser le ressort de serrage dans la direction perpendiculaire à son axe longitudinal.

4. Dispositif de drainage superficiel selon l'une des revendications précédentes, caractérisé en ce que le ressort de serrage (22, 23) est sensiblement en forme de bande et présente une portion de ressort (22) inférieure, sensiblement en U ou en V ainsi que deux portions de maintien (23, 23') adjacentes en U, qui se prolongent chacune avec une extrémité de branche, par une branche de la portion de ressort (22) et dont les côtés ouverts se projettent vers l'extérieur et en ce que le ressort de serrage (22, 23) est placé dans une ouverture (25) d'un élément plat de manière que le ressort de serrage (22, 23) passe par-dessus deux bords opposés l'un à l'autre de l'ouverture (24) de l'élément plat, par les branches des portions de maintien (23, 23').

5. Dispositif de drainage superficiel selon l'une des revendications 3 ou 4, caractérisé en ce que le tenon (41 à 46) est fixé de manière à pouvoir tourner autour de son axe longitudinal et présente deux surfaces d'écartement (47, 47') opposées l'une à l'autre, dont le diamètre correspond à l'extrémité surépaissie de sorte que le tenon (41, 46) s'appliquant par les surfaces d'écartement (47, 47') contre les portions de maintien (23, 23') écarte le ressort de serrage (22, 23) et que le tenon (41 à 46) peut être extrait de son ouverture formant logement (24).

6. Dispositif de drainage superficiel selon l'une des revendications précédentes, caractérisé en ce que le ressort de serrage (22, 23) est fixé dans une traverse (80) pouvant être fixée dans le corps (1).

7. Dispositif de drainage superficiel selon l'une des revendications 1 à 5, caractérisé en ce que le ressort de serrage (22, 23) est fixé dans un châssis (10, 10') en métal, qui est prévu pour supporter la couverture (30), comme renfort d'un bord supérieur (6) du corps (1).

8. Dispositif de drainage superficiel selon la revendication 7, caractérisé en ce que le ressort de serrage (22, 23) est fixé dans une pièce plate (20), qui peut être insérée dans une poche (11) ouverte latéralement ménagée dans le châssis (10, 10').

9. Dispositif de drainage superficiel selon la revendication 8, caractérisé en ce que la couverture (30) présente un ergot de maintien qui empêche la pièce plate (20) de glisser à l'extérieur de la poche (11).

10. Dispositif de drainage superficiel selon la revendication 1, caractérisé en ce que le tenon (41 à 46) ou la pièce de fixation (40) est fixé à la couverture (30) au moyen d'un clou cannelé (100).

11. Dispositif de drainage superficiel selon la revendication 10, caractérisé en ce que le clou cannelé (100) présente des stries (103) d'une longueur d'un ordre de grandeur qui est sensiblement le double du diamètre du clou cannelé (100).

12. Dispositif de drainage superficiel selon l'une des revendications 1 à 11, caractérisé en ce que le tenon (41 à 46) est fixé à la couverture (30) sans qu'on puisse le perdre.

13. Dispositif de drainage superficiel selon l'une des revendications 1 à 12, caractérisé en ce que la forme donnée au ressort de serrage (22, 23) et/ou au tenon (41 à 46) est telle qu'il se produit un resserrage automatique du dispositif de fixation (20, 40) dans le sens d'introduction du tenon (41 à 46).
